# EUROPÄISCHE PATENTANMELDUNG

(11) **EP 3 456 471 A1**
(43) Veröffentlichungstag der Anmeldung: **20.03.2019**
(21) Anmeldenummer: 18192888.8
(22) Anmeldetag: 06.09.2018
(51) Int. Cl.: B23Q 39/02

(54) **WERKZEUGHALTER UND BEARBEITUNGSGRUPPE MIT EINEM DERARTIGEN WERKZEUGHALTER**

(30) Priorität: 14.09.2017 DE 102017121370
(71) Anmelder: Index-Werke GmbH & Co. KG Hahn & Tessky, 73730 Esslingen (DE)
(72) Erfinder: Baumann, Ulrich, 73252 Lenningen (DE); Schaller, Stefan, 76770 Hatzenbühl (DE)
(74) Vertreter: Hoeger, Stellrecht & Partner Patentanwälte mbB

(57) **Zusammenfassung**

Um einen Werkzeughalter für Werkzeugträger einer Werkzeugmaschine, umfassend ein Werkzeughaltergehäuse, welches einen Halteabschnitt umfasst, mit welchem der Werkzeughalter in einer Werkzeughalteraufnahme der Werkzeugträger fixierbar ist, eine in dem Werkzeughaltergehäuse um eine Werkzeugspindelachse drehbare Werkzeugspindel, welche an einem Ende eine Werkzeugaufnahme aufweist und direkt oder indirekt mit einem Antriebsabschnitt gekoppelt ist, welcher um eine Werkzeugantriebsachse drehbar im Werkzeughaltergehäuse gelagert ist und mit einer mit einem im Werkzeugträger vorgesehenen Antrieb für den Werkzeughalter kuppelbaren Antriebskomponente versehen ist, derart zu verbessern, dass dieser sowohl in einem Werkzeugträger mit einem Summenantrieb als auch in einem Werkzeugträger mit einem Einzelantrieb einsetzbar ist, wird vorgeschlagen, dass die Antriebskomponente als erstes Antriebselement eine zum Eingriff in ein Antriebsrad eines Summenantriebs ausgebildete Verzahnung aufweist und dass die Antriebskomponente als zweites Antriebselement eine auf einer dem Werkzeughaltergehäuse abgewandten Seite des ersten Antriebselements angeordnetes zweites Antriebselement zum Antrieb durch einen Einzelantrieb aufweist.

## Beschreibung

Die Erfindung betrifft einen Werkzeughalter für Werkzeugträger einer Werkzeugmaschine, umfassend ein Werkzeughaltergehäuse, welches einen Halteabschnitt umfasst, mit welchem der Werkzeughalter in einer Werkzeughalteraufnahme der Werkzeugträger fixierbar ist, eine in dem Werkzeughaltergehäuse um eine Werkzeugspindelachse drehbare Werkzeugspindel, welche an einem Ende eine Werkzeugaufnahme aufweist und direkt oder indirekt mit einem Antriebsabschnitt gekoppelt ist, welcher um eine Werkzeugantriebsachse drehbar im Werkzeughaltergehäuse gelagert ist und mit einer mit einem im Werkzeugträger vorgesehenen Antrieb für den Werkzeughalter kuppelbaren Antriebskomponente versehen ist.

Derartige Werkzeughalter sind aus dem Stand der Technik bekannt.

Bei derartigen Werkzeughaltern ist der mit der Antriebskomponente versehene Antriebsabschnitt entweder direkt mit dem anderen Ende der Werkzeugspindel gekoppelt, das heißt mit diesem verbunden, oder es sind bei einer indirekten Kopplung zwischen dem anderen Ende der Werkzeugspindel und dem Antriebsabschnitt eine oder mehrere Zwischenwellen vorgesehen.

Bei diesen besteht das Problem, dass diese entweder für einen Summenantrieb oder für einen Einzelantrieb konzipiert sind, so dass je nach Antrieb des Werkzeugträgers ein für diesen konzipierter Werkzeughalter erforderlich ist.

Der Erfindung liegt daher die Aufgabe zugrunde, einen Werkzeughalter der gattungsgemäßen Art derart zu verbessern, dass dieser sowohl in einem Werkzeugträger mit einem Summenantrieb als auch in einem Werkzeugträger mit einem Einzelantrieb einsetzbar ist.

Diese Aufgabe wird bei einem Werkzeughalter der eingangs beschriebenen Art erfindungsgemäß dadurch gelöst, dass die Antriebskomponente als erstes Antriebselement eine zum Eingriff in ein Antriebsrad eines Summenantriebs ausgebildete Verzahnung aufweist und dass die Antriebskomponente als zweites Antriebselement eine auf einer dem Werkzeughaltergehäuse abgewandten Seite des ersten Antriebselements angeordnetes zweites Antriebselement zum Antrieb durch einen Einzelantrieb aufweist.

Der Vorteil der erfindungsgemäßen Lösung ist somit darin zu sehen, dass dadurch die Möglichkeit besteht, ein und denselben Werkzeughalter sowohl in einem Werkzeugträger mit einem Summenantrieb als auch in einem Werkzeugträger mit einem Einzelantrieb einzusetzen.

Unter einem Summenantrieb ist ein Antrieb zu verstehen, bei welchem alle Antriebskomponenten aller Werkzeughalter eines Werkzeugträgers gemeinsam mittels eines Antriebsrades angetrieben werden.

Unter einem Einzelantrieb ist ein Antrieb zu verstehen bei welchem nur eine Antriebskomponente eines Werkzeughalters eines Werkzeugträgers angetrieben wird.

Um eine räumlich kompakt bauende Lösung zu erhalten, ist vorzugsweise vorgesehen, dass das zweite Antriebselement eine radiale Ausdehnung aufweist, die maximal einer radialen Ausdehnung der Verzahnung entspricht.

Um bei der Montage des Werkzeughalters in den jeweiligen Werkzeugträger Kollisionen zu vermeiden ist vorzugsweise vorgesehen, dass das zweite Antriebselement bezüglich der Werkzeugantriebsachse eine maximale radiale Ausdehnung aufweist, die gleich oder kleiner ist als der radiale Abstand eines Zahngrundes einer Zahnkontur der Verzahnung von der Werkzeugantriebsachse.

Das erste Antriebselement könnte beispielsweise als Kegelverzahnung ausgebildet sein, wobei in diesem Fall das Antriebsrad des Summenantriebs als Kegelrad auszubilden ist.

Vorzugsweise ist das erste Antriebselement als Stirnradverzahnung ausgebildet, da diese einfach und verschließbar antreibbar ist.

Ferner ist es günstig, wenn das Antriebsrad des Summenantriebs als Kronenrad ausgebildet ist, da ein derartiges Kronenrad sich gut zum Antrieb einer Stirnradverzahnung eignet.

Hinsichtlich der Ausbildung des zweiten Antriebselements wurden im Zusammenhang mit der bisherigen Erläuterung der einzelnen Ausführungsbeispiele keine näheren Angaben gemacht.

So sieht ein vorteilhaftes Ausführungsbeispiel vor, dass das zweite Antriebselement ein koaxial zur Werkzeugantriebsachse antreibbares Antriebselement ist, so dass insbesondere dem Einzelantrieb mit hohen Drehmomenten gearbeitet werden kann, ohne die Lagerung der Werkzeugspindel in dem Werkzeughaltergehäuse einseitig und folglich zu stark zu beanspruchen.

Besonders günstig ist es auch, wenn das zweite Antriebselement eine axialsymmetrisch zur Werkzeugantriebsachse ausgebildete Antriebskontur aufweist, da damit in einfacher Weise ein koaxialer Antrieb realisiert werden kann.

Ferner ist vorzugsweise vorgesehen, dass die Antriebskontur des zweiten Antriebselements eine zur Werkzeugantriebsachse mindestens zweizählige geradzahlige Symmetrie aufweist.

Eine derartige Symmetrie hat den Vorteil, dass dadurch in einfacher Weise die Möglichkeit besteht, im Falle des Einzelantriebs das zweite Antriebselement dann, wenn kein Antrieb desselben erfolgt, in einer definierten Drehstellung zu führen.

Insbesondere ist die Antriebskontur so ausgebildet, dass sie in Richtung quer zur Werkzeugantriebsachse einen Eingriff einer Abtriebskontur zur Ankopplung der Abtriebskontur an die Antriebskontur zulässt, um ein Kuppeln durch eine relative Verschwenkung der Antriebskontur zur Abtriebskontur durch Verschwenken des Werkzeugträgerkopfes zu ermöglichen.

Eine besonders einfache Realisierungsform sieht vor, dass die Antriebskontur des zweiten Antriebselements als Konturelement ein Klauenkupplungselement aufweist.

Derartige Klauenkupplungselemente als Konturelemente haben den Vorteil, dass diese einfach herstellbar und im Fall eines Einzelantriebs einfach an diesen ankuppelbar sind.

Eine einfache Ausführungsform eines Klauenkupplungselements ist beispielsweise entweder eine Nut oder eine Feder einer Nut/Federverbindung.

Komplexere Klauenkupplungselemente können auch als Mehrfachnuten oder Mehrfachfedern, wie beispielsweise Kreuznuten oder über Kreuz angeordnete Federn, ausgebildet sein.

Alternativ zur Ausbildung der Antriebskontur mit Klauenkupplungselementen sieht eine andere vorteilhafte Lösung vor, dass das zweite Antriebselement als Antriebskontur einen Mehrkant oder eine Mehrkantaufnahme oder eine Verzahnung oder eine Verzahnungsaufnahme aufweist.

Hinsichtlich der Verbindung des ersten Antriebselements mit der Werkzeugspindel wurden bislang keine näheren Angaben gemacht.

Grundsätzlich wäre es möglich, das erste Antriebselement noch über ein Getriebe mit der Werkzeugspindel zu koppeln.

Eine besonders einfache und vorteilhafte Lösung sieht vor, dass das erste Antriebselement mit der Werkzeugspindel drehfest verbunden ist.

Dabei wäre es ebenfalls grundsätzlich denkbar, das erste Antriebselement einstückig an die Werkzeugspindel anzuformen.

Eine besonders vorteilhafte Lösung sieht jedoch vor, dass das erste Antriebselement lösbar mit der Werkzeugspindel verbunden ist.

Ferner wurden ebenfalls hinsichtlich der Kopplung zwischen dem zweiten Antriebselement und der Werkzeugspindel keine näheren Angaben gemacht.

So sieht eine vorteilhafte Lösung vor, dass das zweite Antriebselement drehfest mit der Werkzeugspindel verbunden ist.

Eine besonders einfache Lösung sieht vor, dass das zweite Antriebselement drehfest, insbesondere einstückig, mit dem ersten Antriebselement verbunden ist.

Eine andere vorteilhafte Lösung sieht vor, dass das zweite Antriebselement an die Werkzeugspindel angeformt ist.

Darüber hinaus betrifft die Erfindung eine Bearbeitungsgruppe umfassend mindestens einen ersten Werkzeugträger und mindestens einen zweiten Werkzeugträger, welche jeweils mehrere identisch ausgebildete Werkzeughalteraufnahmen aufweisen, in die hinsichtlich eines jeweiligen Halteabschnitts und einer Antriebskomponente, umfassend ein erstes Antriebselement und ein zweites Antriebselement, identisch ausgebildete Werkzeughalter, insbesondere nach einem der voranstehenden Ansprüche, einsetzbar sind, wobei erfindungsgemäß der mindestens eine erste Werkzeugträger einen Summenantrieb zum gemeinsamen Antreiben aller ersten Antriebselemente der Werkzeughalter aufweist und der mindestens eine zweite Werkzeugträger einen einer einzigen Bearbeitungsstellung zugeordneten Einzelantrieb aufweist, welcher mit dem zweiten Antriebselement von einem in der einzigen Bearbeitungsstellung stehenden Werkzeughalter gekoppelt ist.

Der Vorteil der erfindungsgemäßen Lösung ist somit darin zu sehen, dass diese den Einsatz von ein und demselben Werkzeughalter in mehrere Werkzeugträger mit unterschiedlicher Art des Antriebs der Werkzeughalter ermöglicht.

Dabei ist bei einer Möglichkeit einer erfindungsgemäßen Lösung vorgesehen, dass der mindestens eine erste Werkzeugträger und der mindestens eine zweite Werkzeugträger an derselben Werkzeugmaschine angeordnet sind.

Alternativ dazu ist vorgesehen, dass der mindestens eine erste Werkzeugträger an mindestens einer ersten Werkzeugmaschine und der mindestens eine zweite Werkzeugträger an mindestens einer zweiten Werkzeugmaschine, die auch völlig anders als die erste Werkzeugmaschine ausgebildet sein kann, angeordnet sind, die beide Teil derselben Bearbeitungsgruppe sind.

Hinsichtlich der Ausbildung des mindestens einen ersten Werkzeugträgers wurden bislang keine näheren Angaben gemacht.

So sieht eine vorteilhafte Lösung vor, dass der mindestens eine erste Werkzeugträger einen um eine Drehachse drehbar an einem Werkzeugträgergehäuse angeordneten ersten Werkzeugträgerkopf aufweist, der mit der Vielzahl von identischen Werkzeughalteraufnahmen versehen ist.

Bei einem derartigen Werkzeugträgerkopf ist vorgesehen, dass das Antriebsrad des Summenantriebs in diesem um dessen Drehachse drehbar angeordnet ist, um direkt die ersten Antriebselemente der in den Werkzeughalteraufnahmen sitzenden Werkzeughalter anzutreiben.

Darüber hinaus wurden auch keine näheren Angaben zu dem mindestens einen zweiten Werkzeugträger gemacht.

Vorteilhaft ist es auch im Falle des mindestens zweiten Werkzeugträgers, dass dieser einen um eine Drehachse drehbar an einem Werkzeugträgergehäuse angeordneten Werkzeugträgerkopf aufweist, der mit der Vielzahl von identischen Werkzeughalteraufnahmen versehen ist.

Zweckmäßigerweise ist in einem derartigen zweiten Werkzeugträgerkopf der Einzelantrieb angeordnet.

Hinsichtlich der Ausbildung des Einzelantriebs wurden bislang noch keine näheren Angaben gemacht.

So sieht eine vorteilhafte Lösung vor, dass der Einzelantrieb ein koaxial zu der Werkzeugspindelachse des in der einen Bearbeitungsstellung stehenden Werkzeughalters angeordnetes Abtriebselement aufweist.

Zweckmäßigerweise ist dabei das Abtriebselement an einer Abtriebswelle des Einzelantriebs angeordnet, mit welcher der Werkzeughalter angetrieben wird.

Hinsichtlich des in Eingriff Bringens des zweiten Antriebselements der Antriebskomponente und des Abtriebselement des Einzelantriebs wurden bislang keine näheren Angaben gemacht.

So sieht eine vorteilhafte Lösung vor, dass das zweite Antriebselement der Antriebskomponente und das Abtriebselement des Einzelantriebs beim Einschwenken eines Werkzeughalters in die eine Bearbeitungsstellung relativ zueinander so ausgerichtet sind, dass diese nur durch das Einschwenken miteinander in Eingriff kommen.

Dies lässt sich beispielsweise dadurch realisieren, dass sowohl das zweite Antriebselement als auch das Abtriebselement mit ihrer Antriebskontur beziehungsweise ihrer Abtriebskontur parallel zu einer zur Drehachse des Werkzeugträgerkopfes relativ zum Werkzeugträgergehäuse senkrecht verlaufenden Ebene ausgerichtet sind und somit die Bewegung der Antriebskontur des Antriebselements in dieser Ebene ein in Eingriff Bringen mit der Abtriebskontur des Abtriebselements erlaubt.

Dies ist insbesondere dann gegeben, wenn die Antriebskontur und die hierzu komplementäre Abtriebskontur jeweils eine zweizählige Symmetrie zueinander aufweisen und bei paralleler Ausrichtung zu der senkrecht zur Drehachse stehenden Ebene durch eine Relativbewegung in dieser senkrecht zur Drehachse stehenden Ebene miteinander in Eingriff bringbar sind.

Insbesondere lässt sich dies dann realisieren, wenn die Antriebskontur als Klauenaufnahme oder Klaue und die Abtriebskontur als Klaue oder Klauenaufnahme ausgebildet ist, die in der senkrecht zur Drehachse stehenden Ebene relativ zu einander quer zur Werkzeugspindelachse bewegbar sind, um diese miteinander in Eingriff oder außer Eingriff zu bringen.

Um ferner sicherzustellen, dass die nicht in der einen Bearbeitungsposition stehenden Werkzeughalter sich mit ihren zweiten Antriebselementen in beliebige Stellungen verdrehen, ist vorzugsweise vorgesehen, dass der Einzelantrieb mit einem Führungskamm versehen ist, mit welchem die nicht in der einen Bearbeitungsstellung stehenden Werkzeughalter zu ihrer definierten Ausrichtung mit ihren zweiten Antriebselementen in Wechselwirkung stehen, so dass die zweiten Antriebselemente durch den Führungskamm stets in einer Ausrichtung parallel zu der senkrecht zur Drehachse des Werkzeugträgerkopfs stehenden Ebene verbleiben.

Ferner ist in diesem Fall auch vorgesehen, dass das Abtriebselement des Einzelantriebs nach Beendigung eines Antreibens eines Werkzeughalters stets in definierter Ausrichtung parallel zu der senkrecht zur Drehachse des Werkzeugträgerkopfes verlaufenden Ebene ausgerichtet stehen bleibt, so dass das jeweilige so ausgerichtete zweite Antriebselement des soeben angetriebenen Werkzeughalters in dieser Ausrichtung beim Verschwenken des Werkzeugträgerkopfes um die Drehachse von dem Abtriebselement in Wechselwirkung mit dem Führungskamm geschwenkt werden kann und von diesem wiederum in dieser Stellung so lange aufrechterhalten wird, bis wieder ein Einschwenken des Werkzeughalters in die eine Bearbeitungsstellung erfolgt, wobei bei diesem Einschwenken wiederum das zweite Antriebselement dieses Werkzeughalters mit dem Abtriebselement des Einzelantriebs in Eingriff kommt.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Werkzeughalter (80) für Werkzeugträger (42, 52) einer Werkzeugmaschine (10), umfassend ein Werkzeughaltergehäuse (82), welches einen Halteabschnitt (84) umfasst, mit welchem der Werkzeughalter (80) in einer Werkzeughalteraufnahme (74) der Werkzeugträger (42, 52) fixierbar ist, eine in dem Werkzeughaltergehäuse (82) um eine Werkzeugspindelachse (104) drehbare Werkzeugspindel (102), welche an einem Ende eine Werkzeugaufnahme (114) aufweist und direkt oder indirekt mit einem Antriebsabschnitt (122) gekoppelt ist, welcher um eine Werkzeugantriebsachse (126) drehbar im Werkzeughaltergehäuse (82) gelagert ist und mit einer mit einem im Werkzeugträger (42, 52) vorgesehenen Antrieb (160, 180) für den Werkzeughalter (80) kuppelbaren Antriebskomponente (130) versehen ist,
   dadurch gekennzeichnet, dass die Antriebskomponente (130) als erstes Antriebselement (152) eine zum Eingriff in ein Antriebsrad (162) eines Summenantriebs ausgebildete Verzahnung (154) aufweist und dass die Antriebskomponente (130) als zweites Antriebselement (172) eine auf einer dem Werkzeughaltergehäuse (82) abgewandten Seite des ersten Antriebselements (152) angeordnetes zweites Antriebselement (172) zum Antrieb durch einen Einzelantrieb (180) aufweist.
2. Werkzeughalter nach Ausführungsform 1, dadurch gekennzeichnet, dass das zweite Antriebselement (172) eine radiale Ausdehnung aufweist, die maximal einer radialen Ausdehnung der Verzahnung (154) entspricht.
3. Werkzeughalter nach Ausführungsform 2, dadurch gekennzeichnet, dass das zweite Antriebselement (172) bezüglich der Werkzeugantriebsachse (126) eine maximale radiale Ausdehnung aufweist, die gleich oder kleiner als der radiale Abstand eines Zahngrundes (156) einer Zahnkontur der Verzahnung (154) .
4. Werkzeughalter nach einer der voranstehenden Ausführungsformen, dadurch gekennzeichnet, dass das erste Antriebselement (152) als eine Stirnradverzahnung (154) ausgebildet ist.
5. Werkzeughalter nach einer der voranstehenden Ausführungsformen, dadurch gekennzeichnet, dass das zweite Antriebselement (172) ein koaxial zur Werkzeugantriebsachse (126) antreibbares Antriebselement ist.
6. Werkzeughalter nach einer der voranstehenden Ausführungsformen, dadurch gekennzeichnet, dass das zweite Antriebselement eine axialsymmetrisch zur Werkzeugantriebsachse (126) ausgebildete Antriebskontur (174) aufweist.
7. Werkzeughalter nach einer der voranstehenden Ausführungsformen, dadurch gekennzeichnet, dass die Antriebskontur (174) des zweiten Antriebselements (172) eine zur Werkzeugantriebsachse (126) mindestens zweizählige geradzahlige Symmetrie aufweist.
8. Werkzeughalter nach Ausführungsform 7, dadurch gekennzeichnet, dass die Antriebskontur (174) in Richtung quer zur Werkzeugantriebsachse (126) einen Eingriff einer Abtriebskontur (184) zulassend ausgebildet ist.
9. Werkzeughalter nach einer der voranstehenden Ausführungsformen, dadurch gekennzeichnet, dass die Antriebskontur (174) des zweiten Antriebselements (172) als Konturelemente (176) Klauenkupplungselemente aufweist.
10. Werkzeughalter nach einer der voranstehenden Ausführungsformen, dadurch gekennzeichnet, dass das erste Antriebselement (152) mit der Werkzeugspindel (102) drehfest verbunden ist.
11. Werkzeughalter nach Ausführungsform 10, dadurch gekennzeichnet, dass das erste Antriebselement lösbar mit einem mit der Werkzeugspindel (102) gekoppelten Antriebsabschnitt (122) verbunden ist.
12. Werkzeughalter nach einer der voranstehenden Ausführungsformen, dadurch gekennzeichnet, dass das zweite Antriebselement (172) drehfest mit dem Antriebsabschnitt (122) verbunden ist.
13. Werkzeughalter nach Ausführungsform 12, dadurch gekennzeichnet, dass das zweite Antriebselement (172') drehfest mit dem ersten Antriebselement (152) verbunden ist.
14. Werkzeughalter nach Ausführungsform 12, dadurch gekennzeichnet, dass das zweite Antriebselement (172) an den Antriebsabschnitt (122) angeformt ist.
15. Bearbeitungsgruppe umfassend mindestens einen ersten Werkzeugträger (42) und mindestens einen zweiten Werkzeugträger (52), in welche jeweils mehrere identisch ausgebildete Werkzeughalteraufnahmen (74) aufweisen, in die hinsichtlich eines jeweiligen Halteabschnitts (84) und einer Antriebskomponente (130), umfassend ein erstes Antriebselement (152) und ein zweites Antriebselement (172), identisch ausgebildete Werkzeughalter (80), insbesondere nach einer der voranstehenden Ausführungsformen, einsetzbar sind, wobei der mindestens eine erste Werkzeugträger (42) einen Summenantrieb (150) zum gemeinsamen Antreiben aller ersten Antriebselemente (152) der Werkzeughalter (80) aufweist und der mindestens eine zweite Werkzeugträger (52) einen einer einzigen Bearbeitungsstellung zugeordneten Einzelantrieb (180) aufweist, welcher mit dem zweiten Antriebselement (172) von einem in der einzigen Bearbeitungsstellung stehenden Werkzeughalter (80) gekoppelt ist.
16. Bearbeitungsgruppe nach Ausführungsform 15, dadurch gekennzeichnet, dass der mindestens eine erste Werkzeugträger (42) und der mindestens eine zweite Werkzeugträger (52) an derselben Werkzeugmaschine (10) angeordnet sind.
17. Bearbeitungsgruppe nach Ausführungsform 15, dadurch gekennzeichnet, dass der mindestens eine erste Werkzeugträger (42) an mindestens einer ersten Werkzeugmaschine (10₁) und der mindestens eine zweite Werkzeugträger (52) an mindestens einer zweiten Werkzeugmaschine (10₂) angeordnet sind, die beide Teil derselben Bearbeitungsgruppe sind.
18. Bearbeitungsgruppe nach einer der Ausführungsformen 15 bis 17, dadurch gekennzeichnet, dass der mindestens eine erste Werkzeugträger (42) einen um eine Drehachse (48) drehbar an einem Werkzeugträgergehäuse (46) angeordneten ersten Werkzeugträgerkopf (44) aufweist, der mit der Vielzahl von identischen Werkzeughalteraufnahmen (74) versehen ist.
19. Bearbeitungsgruppe nach Ausführungsform 18, dadurch gekennzeichnet, dass in dem ersten Werkzeugträgerkopf (44) das Antriebsrad (162) des Summenantriebs (150) um dessen Drehachse (48) drehbar angeordnet ist.
20. Bearbeitungsgruppe nach einer der Ausführungsformen 15 bis 19, dadurch gekennzeichnet, dass der mindestens eine zweite Werkzeugträger (52) einen um eine Drehachse (58) drehbar an einem Werkzeugträgergehäuse (56) angeordneten zweiten Werkzeugträgerkopf (54) aufweist, der mit der Vielzahl von identischen Werkzeughalteraufnahmen (74) versehen ist.
21. Bearbeitungsgruppe nach Ausführungsform 20, dadurch gekennzeichnet, dass in dem zweiten Werkzeugträgerkopf (54) der Einzelantrieb (180) angeordnet ist.
22. Bearbeitungsgruppe nach Ausführungsform 21, dadurch gekennzeichnet, dass der Einzelantrieb (180) ein koaxial zu der Werkzeugspindelachse (104) des in der einzigen Bearbeitungsstellung stehenden Werkzeughalters (80) angeordnetes Abtriebselement (182) aufweist.
23. Bearbeitungsgruppe nach Ausführungsform 22, dadurch gekennzeichnet, dass das Abtriebselement (182) an einer Abtriebswelle (192) des Einzelantriebs (180) angeordnet ist.
24. Bearbeitungsgruppe nach einer der Ausführungsformen 15 bis 23, dadurch gekennzeichnet, dass das zweite Antriebselement (172) der Antriebskomponente (130) und das Abtriebselement (182) des Einzelantriebs (180) beim Einschwenken eines Werkzeughalters (80) in die eine Bearbeitungsstellung relativ zueinander so ausgerichtet sind, dass diese nur durch das Einschwenken miteinander in Eingriff kommen.
25. Bearbeitungsgruppe nach einer der Ausführungsformen 15 bis 24, dadurch gekennzeichnet, dass der Einzelantrieb (180) mit einem Führungskamm (232) versehen ist, mit welchem die nicht in der einen Bearbeitungsstellung stehenden Werkzeughalter (80) zu ihrer definierten Ausrichtung mit ihren zweiten Antriebselementen (172) in Wechselwirkung stehen.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: ein Ausführungsbeispiel einer Werkzeugmaschine mit zwei Werkzeugträgern, die ein erstes Ausführungsbeispiel einer Bearbeitungsgruppe bilden;
- Fig. 2: einen vertikalen Schnitt durch einen ersten Werkzeugträgerkopf mit einem ersten Ausführungsbeispiel eines eingesetzten angetriebenen Werkzeughalters;
- Fig. 3: eine vergrößerte Darstellung entsprechend Fig. 2 des ersten Ausführungsbeispiels des erfindungsgemäßen Werkzeughalters, eingesetzt in den ersten Werkzeugträger;
- Fig. 4: eine perspektivische Darstellung des ersten Ausführungsbeispiels der Antriebskomponente des erfindungsgemäßen Werkzeughalters;
- Fig. 5: einen Schnitt ähnlich Fig. 2 durch einen zweiten Werkzeugträgerkopf mit eingesetzten Werkzeughaltern gemäß dem ersten Ausführungsbeispiel;
- Fig. 6: eine perspektivische Darstellung eines in dem zweiten Werkzeugträgerkopf angeordneten Einzelantriebs;
- Fig. 7: einen vertikalen Schnitt durch den Einzelantrieb gemäß Fig. 6 mit Werkzeughaltern gemäß dem ersten Ausführungsbeispiel;
- Fig. 8: eine ausschnittsweise vergrößerte Darstellung ähnlich Fig. 3 durch ein zweites Ausführungsbeispiel eines erfindungsgemäßen Werkzeughalters;
- Fig. 9: einen Schnitt ähnlich Fig. 8 durch ein drittes Ausführungsbeispiel eines erfindungsgemäßen Werkzeughalters;
- Fig. 10: eine perspektivische Darstellung einer ersten Werkzeugmaschine eines zweiten Ausführungsbeispiels einer Bearbeitungsgruppe und
- Fig. 11: eine perspektivische Darstellung einer zweiten Werkzeugmaschine des zweiten Ausführungsbeispiels einer Bearbeitungsgruppe.

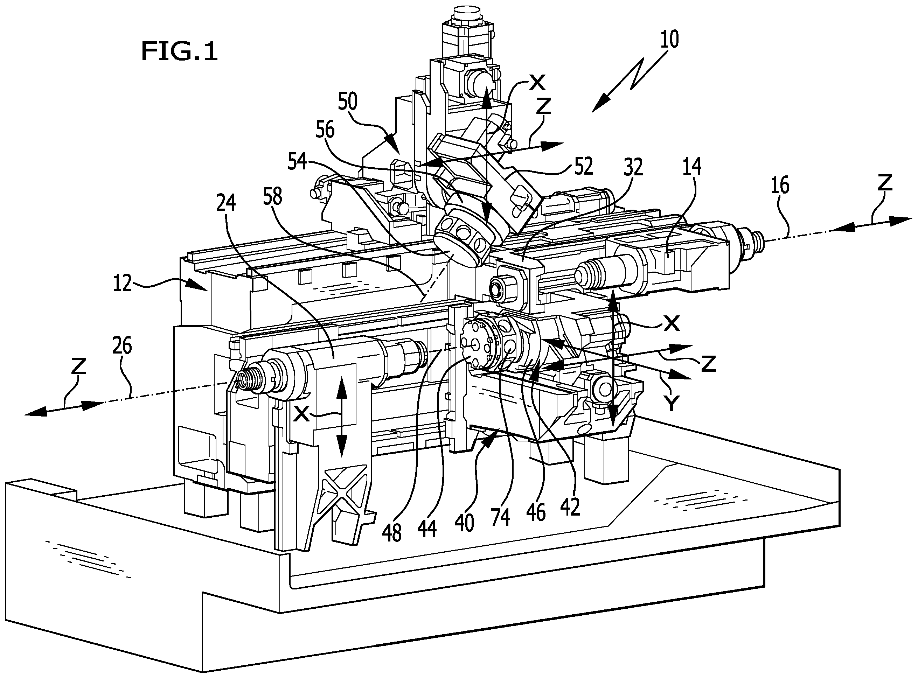

Ein in Fig. 1 dargestelltes Ausführungsbeispiel einer als Ganzes mit 10 bezeichneten Werkzeugmaschine umfasst ein Maschinengestell 12, an welchem eine Werkstückspindel 14 angeordnet ist, welche zur Aufnahme eines zu bearbeitenden Werkstücks dient.

Mit der Werkstückspindel 14 ist ein Werkstück um eine Spindelachse 16 rotierend antreibbar, wobei die Spindelachse 16 eine Z-Richtung der Werkzeugmaschine festlegt.

Beispielsweise ist der Werkstückspindel 14 noch eine Werkstückführungsbuchse 32 zur Führung eines in der Werkstückspindel 14 gehaltenen Werkstücks beim Langdrehen zugeordnet, wobei die Werkstückführungsbuchse 32 in diesem Fall stationär relativ zum Maschinengestell 12 angeordnet ist.

Die Werkzeugmaschine 10 umfasst beispielsweise eine weitere Werkstückspindel 24, deren Spindelachse 26 ebenfalls parallel zur Z-Richtung verläuft und die ihrerseits an dem Maschinengestell 12 in der Z-Richtung bewegbar gelagert ist.

Ferner ist die Werkstückspindel 24 relativ zum Maschinengestell 12 in einer senkrecht zur Spindelachse 16 und somit senkrecht zur Z-Richtung verlaufenden X-Richtung bewegbar gelagert.

Zur Bearbeitung der Werkstücke ist am Maschinengestell 12 ein von einem Schlittensystem 40 getragener und durch dieses relativ zum Maschinengestell 12 bewegbarer erster Werkzeugträger 42 angeordnet, welcher einen als Revolverkopf ausgebildeten Werkzeugträgerkopf 44 trägt, der relativ zu einem Werkzeugträgergehäuse 46 um eine Drehachse 48 drehbar angeordnet ist, um umfangsseitig an dem Werkzeugträgerkopf 44 angeordnete Werkzeuge in eine Einsatzposition bringen zu können.

Der Werkzeugträger 42 ist durch das Schlittensystem 40 beispielsweise in einer X-, einer Y-Richtung und einer Z-Richtung bewegbar.

Die Werkzeugmaschine 10 umfasst ferner einen von einem Schlittensystem 50 getragenen und durch dieses relativ zum Maschinengestell 12 bewegbaren zweiten Werkzeugträger 52, welcher ebenfalls mit einem als Revolverkopf ausgebildeten Werkzeugträgerkopf 54 versehen ist, der seinerseits relativ zu einem Werkzeugträgergehäuse 56 um eine Drehachse 58 drehbar ist, um ebenfalls unterschiedliche an dem Werkzeugträgerkopf 54 angeordnete Werkzeuge in Einsatz bringen zu können.

Der Werkzeugträger 52 ist durch das Schlittensystem 50 beispielsweise in einer Z-Richtung, einer X-Richtung und einer Y-Richtung relativ zum Maschinengestell bewegbar und um eine B-Achse drehbar.

Somit bilden die beiden Werkzeugträger 42, 52 insgesamt eine Bearbeitungsgruppe, zur Bearbeitung der in den Werkstückspindeln 14, 24 angeordneten und um die jeweilige Spindelachse 16, 26 rotierend angetriebenen Werkstücke.

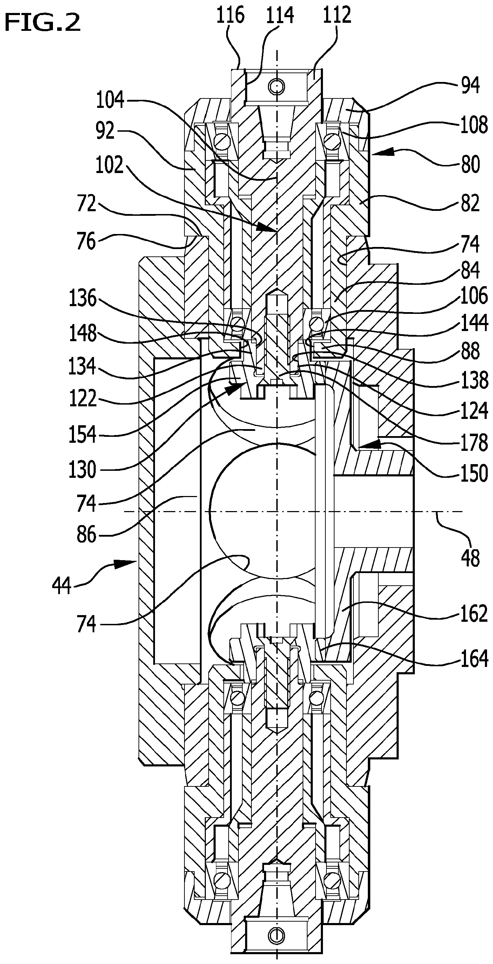

Wie in Fig. 2 dargestellt, umfasst einer der Werkzeugträger 42, 52, beispielsweise der Werkzeugträger 42, den Werkzeugträgerkopf 44, in welchem an einer Umfangsseite eine Vielzahl von identischen Werkzeugaufnahmen 74 angeordnet ist, in welche als Ganzes mit 80 bezeichnete Werkzeughalter einsetzbar sind.

Jeder der Werkzeughalter 80 umfasst ein Werkzeughaltergehäuse 82 mit einem Halteabschnitt 84, welcher beispielsweise zylindrisch ausgebildet ist und in eine ebenfalls beispielsweise zylindrisch ausgebildete Werkzeughalteraufnahme 74 einsetzbar ist, um den Werkzeughalter 80 zu positionieren.

Insbesondere erfolgt die Fixierung des Werkzeughalters 80 an dem Werkzeugträgerkopf 44 in bekannter Art und Weise, beispielsweise durch zeichnerisch nicht dargestellte Schrauben.

Das Werkzeughaltergehäuse 82 erstreckt sich mit dem Halteabschnitt 84 durch die Werkzeugaufnahme 74 hindurch, und zwar von der Umfangseite 72 auf welcher der Halteabschnitt 84 mit einer Stützfläche 76 aufsitzt, bis zu einem Innenraum 86 des Werkzeugträgerkopfes 44, wobei der Halteabschnitt 84 so ausgebildet ist, dass dieser mit einer Endwand 88 an den Innenraum 86 angrenzt.

Insbesondere ist das Werkzeughaltergehäuse 82 mit einem über den Halteabschnitt 84 überstehenden und die Stützfläche 76 bildenden Außenkörper 92 versehen, welcher auf einer dem Halteabschnitt 84 gegenüberliegenden Seite durch einen Deckel 94 abgeschlossen ist.

In dem Werkzeughaltergehäuse 82 ist eine Werkzeugspindel 102 um eine Spindelachse 104 drehbar gelagert, und zwar beispielsweise durch ein im Anschluss an die Endwand 88 in dem Halteabschnitt 84 angeordnetes Lager 106 und ein nahe dem Deckel 94 in dem Außenkörper 92 angeordnetes Lager 108.

Ferner durchsetzt die Werkzeugspindel 102 mit einem Spindelkopf 112, welcher eine Werkzeugaufnahme 114 aufweist, den Deckel 94, wobei beispielsweise die Werkzeugaufnahme 114 so ausgebildet ist, dass diese sich von einer Stirnseite 116 des Spindelkopfes 112 in diesen hinein erstreckt.

In die Werkzeugaufnahme 114 ist jede Art von rotierend antreibbarem Werkzeug, wie beispielsweise ein Bohrwerkzeug oder ein Fräswerkzeug, einsetzbar.

Ferner umfasst bei dem ersten Ausführungsbeispiel die Werkzeugspindel 102 einen einstückig mit dieser verbundenen Antriebsabschnitt 122, der sich durch die Endwand 88 hindurch erstreckt, und der um eine bei diesem Ausführungsbeispiel zur Werkzeugspindelachse 104 koaxiale Werkzeugantriebsachse 126 drehbar im Werkzeughaltergehäuse 82 gelagert ist, der Antriebsabschnitt 122 eine als Ganzes mit 130 bezeichnete Antriebskomponente trägt und mit dieser drehfest verbunden ist.

Beispielsweise umfasst die Antriebskomponente 130 einen Grundkörper 134, welcher eine Antriebsabschnittsaufnahme 136 aufweist, in welche der Antriebsabschnitt 122 der Werkzeugspindel 102 eingreift, um die Antriebskomponente 130 zentriert zur Werkzeugspindelachse 104 aufzunehmen, und drehbar zu lagern so dass die Antriebskomponente 130 mit der Werkzeugspindel 102 mitrotieren kann.

Zur Herstellung einer drehfesten Verbindung zwischen dem Antriebsabschnitt 122 der Werkzeugspindel 102 und der Antriebskomponente 130 ist beispielsweise der Antriebsabschnitt 122 mit einer äußeren Formschlusskontur 124 versehen, welche mit einer inneren Formschlusskontur 138 der Antriebsabschnittsaufnahme 136 in Eingriff steht, so dass die Antriebskomponente 130 durch den Antriebsabschnitt 122 der Werkzeugspindel 102 nicht nur konzentrisch zur Werkzeugspindelachse 104 geführt ist, sondern auch formschlüssig, beispielsweise mittels einer Polygonverbindung, drehfest mit der Werkzeugspindel 102 verbunden ist.

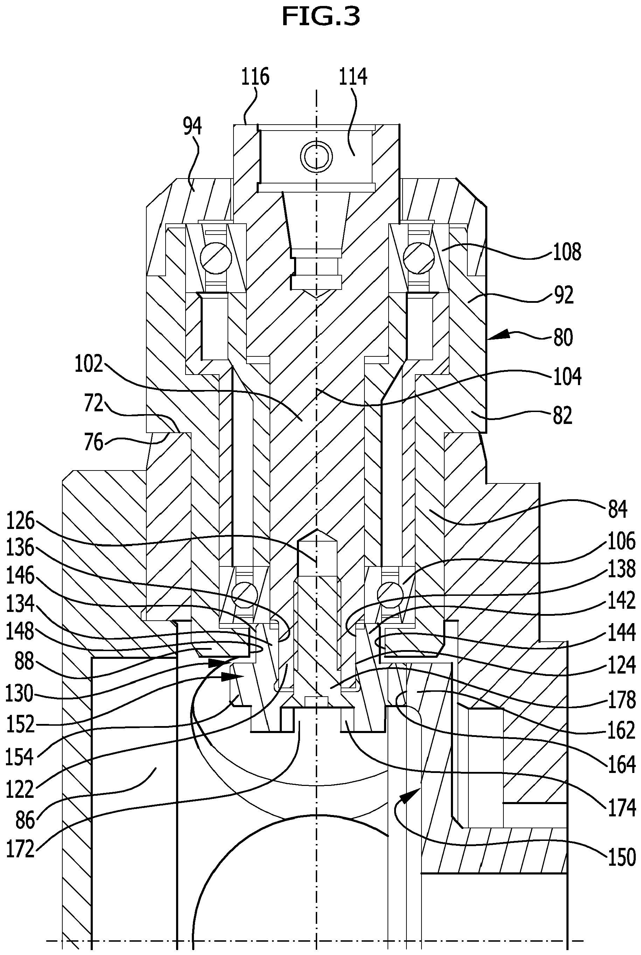

Wie in Fig. 2 bis 4 dargestellt, umfasst der Grundkörper 134 einen zylindrischen Abschnitt 142, welcher in einen Durchlass 144 in der Endwand 88 eingreift und, wie in Fig. 3 dargestellt eine zylindrische Umfangsfläche 146 aufweist, die einer Innenkontur 148 des Durchlasses 144 zugewandt ist.

Ferner weist die Antriebskomponente 130 in einem über die Endwand 88 überstehenden Bereich ein erstes Antriebselement 152 auf, welches beispielsweise insbesondere durch eine radial über die Umfangsfläche 146 überstehende Verzahnung 154 gebildet ist, wobei die Verzahnung 154 beispielsweise so angeordnet ist, dass diese in Richtung der Werkzeugspindelachse 104 gesehen im Anschluss an die Endwand 88 außerhalb des Werkzeughaltergehäuses 82 angeordnet ist.

Bei dem in die jeweilige Werkzeughalteraufnahme 74 des Werkzeugträgerkopfes 44 eingesetzten Werkzeughalter 80 steht somit die erste Antriebskomponente 130 mit der Verzahnung 154 in dem Innenraum 86 des Werkzeugträgerkopfes 44 und ist für einen Antrieb zugänglich.

Ein Antreiben der Verzahnung 154 erfolgt beispielsweise durch einen Summenantrieb 150, umfassend ein koaxial zur Drehachse 48 des Werkzeugträgerkopfes 44 in dem Innenraum 86 angeordnetes Kronenrad 162 mit einer Kronenradverzahnung 164 welches durch einen zeichnerisch nicht dargestellten und im Werkzeugträgergehäuse 46 angeordneten Antriebsmotor antreibbar ist.

Die Kronenverzahnung 164 liegt dabei in einem derartigen radialen Abstand von der Drehachse 48 des Werkzeugträgerkopfes, dass sämtliche in die Werkzeughalteraufnahmen 74 des Werkzeugträgerkopfes 44 eingesetzten Werkzeughalter 80, sofern sie mit einer Antriebskomponente 130 mit einem als Verzahnung 154 ausgebildeten ersten Antriebselement 152 versehen sind, angetrieben werden können.

In diesem Fall erfolgt somit ein Antrieb aller der in den Werkzeughalteraufnahmen 74 eingesetzten Werkzeughalter 80 durch das Kronenrad 162 mit der Kronenradverzahnung 164 als Summenantrieb, so dass die Werkzeugspindeln 102 all dieser Werkzeughalter 80 mit den in diese eingesetzten Werkzeugen gleichzeitig antreibbar sind.

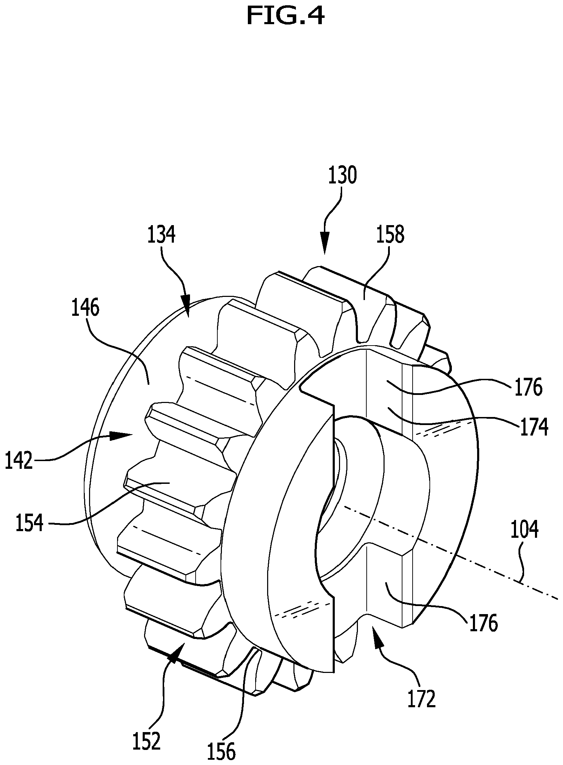

Die Antriebskomponente 130 trägt insbesondere auf einer dem zylindrischen Abschnitt 142 derselben abgewandten Seite und somit vorzugsweise auch auf einer dem Werkzeughaltergehäuse 82 abgewandten Seite des ersten Antriebselements 152 ein zweites Antriebselement 172, welches bei dem ersten Ausführungsbeispiel, dargestellt in Fig. 4 eine Antriebskontur 174 aufweist, die zum einen bezüglich der Spindelachse 104 radial innerhalb der Verzahnung 154 angeordnet ist, insbesondere bezogen auf die Werkzeugspindelachse 104 radial innerhalb eines Zahngrundes 156 einer Zahnkontur 158 der Verzahnung 154.

Die Antriebskontur 174 ist vorzugsweise so ausgebildet, dass sie symmetrisch zur Spindelachse 104, beispielsweise entsprechend einer zweizähligen Symmetrie zur Spindelachse 104 angeordnete Konturelemente 176 aufweist, die bei dem ersten Ausführungsbeispiel als Konturelemente einer Klauenkupplung, insbesondere als Klauenaufnehmen, ausgebildet sind.

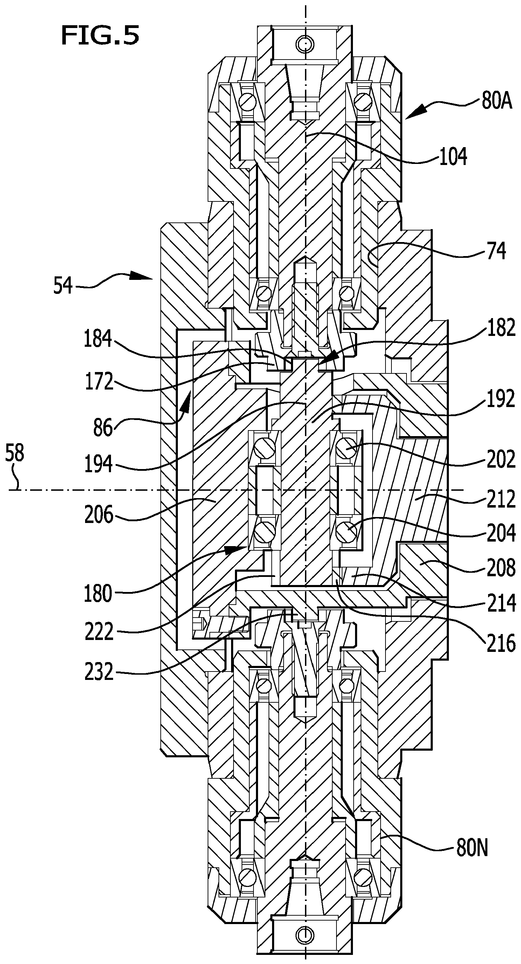

Wie in Fig. 5 dargestellt, ist der zweite Werkzeugträgerkopf 54 zumindest insoweit, als die Werkzeughalteraufnahmen 74 betroffen sind, identisch ausgebildet wie der erste Werkzeugträger 44, so dass in diesen die identischen Werkzeughalter 80 wie beim Werkzeugträgerkopf 44 einsetzbar sind.

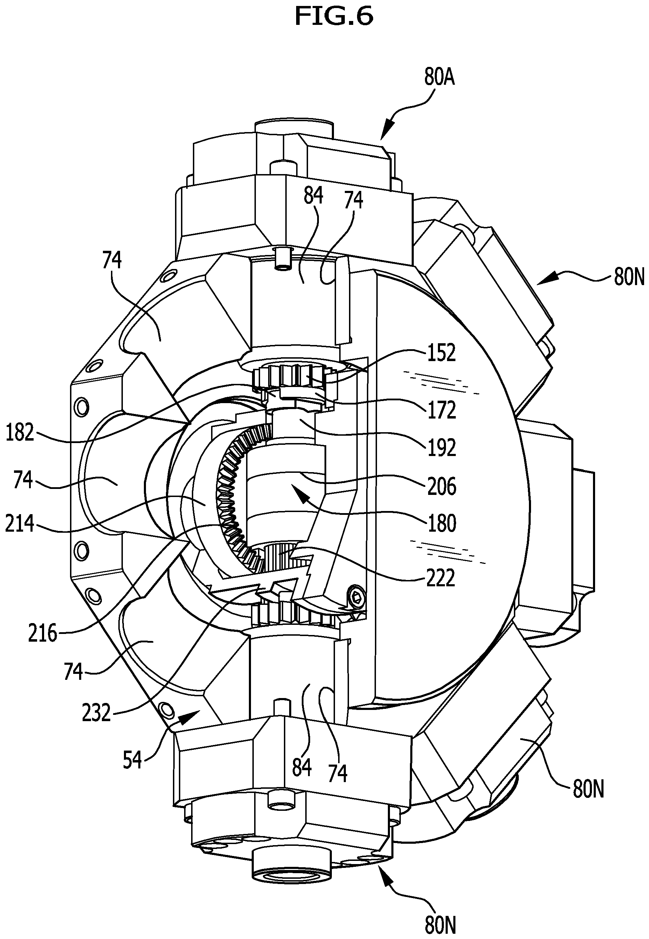

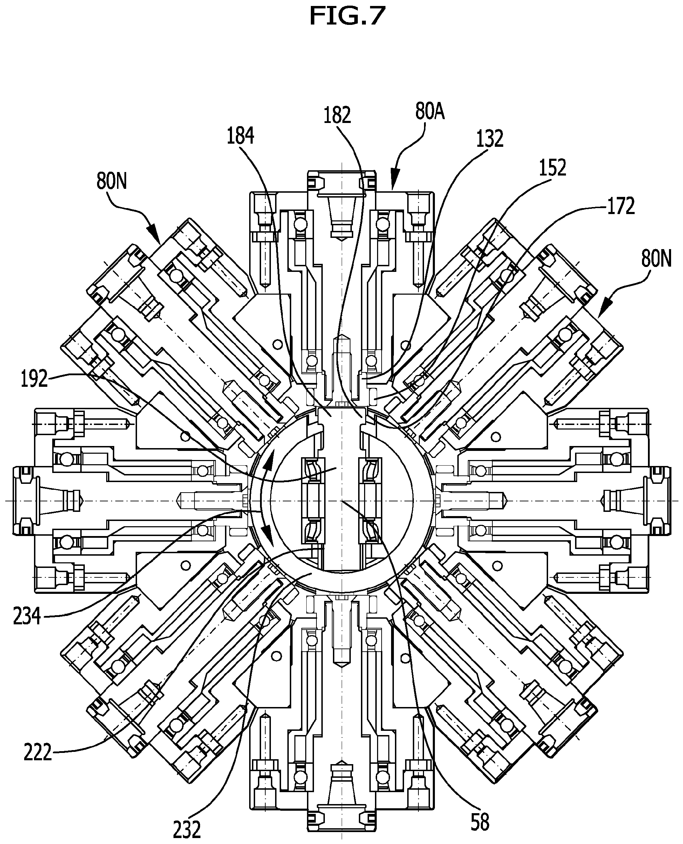

Wie in den Fig. 5 bis 7 dargestellt, umfasst der Werkzeugträgerkopf 54 ebenfalls eine Vielzahl von Werkzeughalteraufnahmen 74, in welche die Werkzeughalter 80 mit ihrem Halteabschnitt 84 einsetzbar sind, wobei jeweils nur einer der Werkzeughalter 80, in den Fig. 5 bis 7 der in der Bearbeitungsposition stehende Werkzeughalter 80A, angetrieben werden kann, während die übrigen Werkzeughalter 80, in den Fig. 5 bis 7 bezeichnet als Werkzeughalter 80N nicht angetrieben sind.

Allerdings ist zum Antrieb der Werkzeughalter 80 im Innenraum 86 des Werkzeugträgerkopfes 54 ein als Ganzes mit 180 bezeichneter Einzelantrieb vorgesehen, welcher ein einer einzigen Bearbeitungsposition zugeordnetes und koaxial zur Werkzeugspindelachse 104 rotierend angeordnetes Abtriebselement 182 aufweist, das eine Abtriebskontur 184 aufweist, die mit korrespondierend zur Antriebskontur 174 des zweiten Antriebselements 172 ausgebildet ist und im einfachsten Fall, in dem die Konturelemente 176 des zweiten Antriebselements 172 als Klauenkonturelemente ausgebildet sind, ihrerseits als Antriebsklaue ausgebildet ist.

Vorzugsweise sitzt dabei das Abtriebselement 182 auf einer Abtriebswelle 192, die um eine koaxial zu der Werkzeugspindelachse 104 des in dem dieser Bearbeitungsposition durch entsprechendes Drehen des Werkzeugträgerkopfes 54 zugeordneten Werkzeughalters 80 verlaufenden Wellenachse 194 drehbar ist, wobei die Abtriebswelle 192 hierzu in zwei in Richtung der Wellenachse 194 im Abstand von einander angeordneten Wellenlagern 202 und 204 gelagert ist, die ihrerseits in einem Lagerblock 206 angeordnet sind, der stationär relativ zu einem ebenfalls zum Werkzeugträgergehäuse 56 stationär angeordneten Trägerrohr 208 für die Lagerung dieses Werkzeugträgerkopfes 54 gehalten ist.

Das Trägerrohr 208 des Werkzeugträgerkopfes 54 verläuft koaxial zur Drehachse 58 des Werkzeugträgerkopfes 54 und in diesem Trägerrohr 208 ist koaxial zur Drehachse 58 eine Antriebswelle 212 angeordnet, die ihrerseits ein in dem Innenraum 86 des Werkzeugträgerkörpers 54 angeordnetes Kronenrad 214 trägt, welches mit einer Kronenverzahnung 216 in eine Verzahnung 222 der Abtriebswelle 192 eingreift, wobei die Verzahnung 222 der Abtriebswelle beispielsweise an dieser auf einer dem Abtriebselement 182 gegenüberliegenden Seite angeordnet ist.

Um sicherzustellen, dass das zweite Antriebselement 172 und somit auch die Antriebskomponente 130 des momentan angetriebenen Werkzeughalters 80 nicht beim Weiterschalten des Revolverkopfes so verdrehen kann, dass diese wiederum mit dem Antriebselement 182 in Eingriff kommen kann, ist für die zweiten Antriebselemente 172 aller Werkzeughalteraufnahmen 74, deren Spindelachsen 104 nicht koaxial zu der Wellenachse 194 des Einzelantriebs 180 ausgerichtet sind, ein in dem Innenraum 96 verlaufender und starr mit dem Trägerrohr 208 verbundener Führungskamm 232 vorgesehen, welcher die zweiten Antriebselemente 172 mit ihrer Antriebskontur 174 so ausgerichtet hält, dass die Konturelemente 176 in Umlaufrichtung aufeinanderfolgend sowie parallel zu einer senkrecht zur Drehachse 58 verlaufenden geometrischen Ebene geführt sind, so dass dann, wenn nach Beendigung des Antriebs des in der Bearbeitungsposition stehenden angetriebenen Werkzeughalters 80A ein Drehen des Werkzeugträgerkopfes 54 um die Drehachse 58 erfolgt, und das Abtriebselement 182 mit seiner Abtriebskontur 184 ebenfalls parallel zur Umlaufrichtung 234 sowie parallel zu einer senkrecht zur Drehachse 58 verlaufenden geometrischen Ebene ausgerichtet ist, beim Drehen des Werkzeugträgerkopfes 54 um die Drehachse 58 einerseits das zweite Antriebselement 172 des soeben angetriebenen Werkzeughalters 80A auf den Führungskamm 232 aufgleiten kann und andererseits das bislang nicht angetriebene zweite Antriebselement 172 des dem soeben angetriebenen Werkzeughalter 80A entgegengesetzt zur Drehrichtung nächstliegenden Werkzeughalters 80N auf die Abtriebskontur 184 des Abtriebselements 182 aufgleiten kann, wobei die Abtriebskontur 184 dabei mit den Konturelementen 176 der Antriebskontur 174 in Eingriff kommt, die bislang durch den Führungskamm 232 in einer parallel zur Umlaufrichtung 234 parallelen Ausrichtung gehalten wurden.

Damit besteht die Möglichkeit, den Einzelantrieb 180 zum Antrieb mit einem der Werkzeughalter 80 in den Werkzeughalteraufnahmen 74 des Werkzeugträgerkopfes 54 lediglich durch Drehen des Werkzeugträgerkopfes 54 zu koppeln und zu entkoppeln.

Bei dem ersten Ausführungsbeispiel, dargestellt in den Fig. 1 bis 7, ist die Antriebskomponente 130 durch ein einstückiges Teil gebildet, welches neben dem Grundkörper 134 mit der Antriebsabschnittsaufnahme 136, der inneren Formschlusskontur 138 und dem zylindrischen Abschnitt 142 sowohl das erste Antriebselement 152 als auch das zweite Element 172 umfasst und als eine Einheit an dem Antriebsabschnitt 122, beispielsweise mittels einer Schraube 178, fixierbar ist.

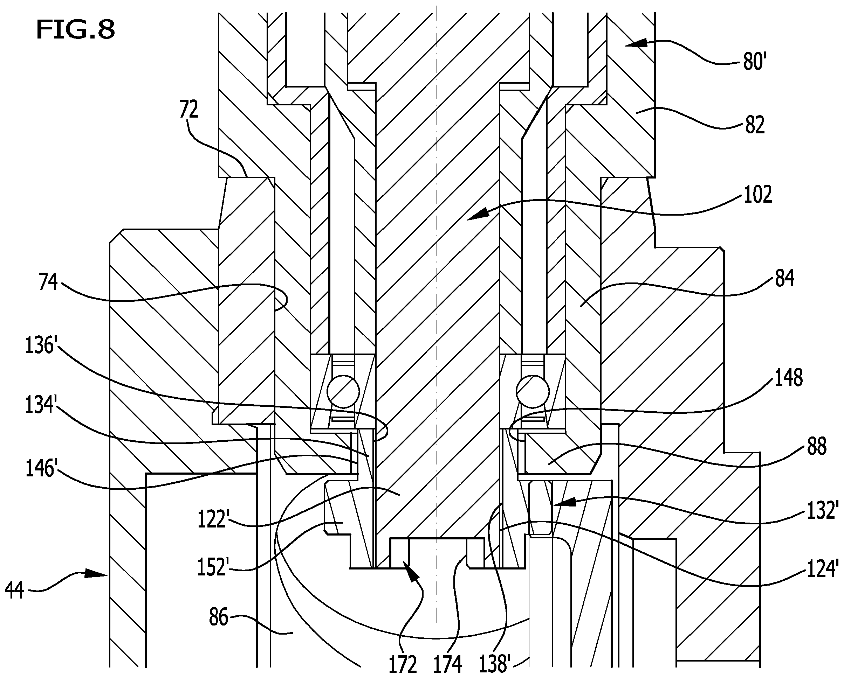

Bei einem zweiten Ausführungsbeispiel, dargestellt in Fig. 8, ist der Antriebsabschnitt 122' der Werkzeugspindel 102 so ausgebildet, dass dieser die Antriebskontur 174 und somit das zweite Antriebselement 172 mit umfasst, die beispielsweise einstückig an den Antriebsabschnitt 122' angeformt sind.

Ferner bilden der Grundkörper 134' mit der Antriebsabschnittsaufnahme 136' und der inneren Formschlusskontur 138' ein separates Teil, welches auf die äußere Formschlusskontur 124' des Antriebsabschnitts 122 aufschiebbar und somit drehfest mit dem Antriebsabschnitt 122' verbindbar ist, wobei die Umfangsfläche 146' in gleicher Weise wie beim ersten Ausführungsbeispiel der Innenkontur 148 des der Endwand 88 zugewandt angeordnet ist, um beispielsweise eine Abdichtung zu ermöglichen.

Im Übrigen sind diejenigen Teile des zweiten Ausführungsbeispiels, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel verwiesen werden kann.

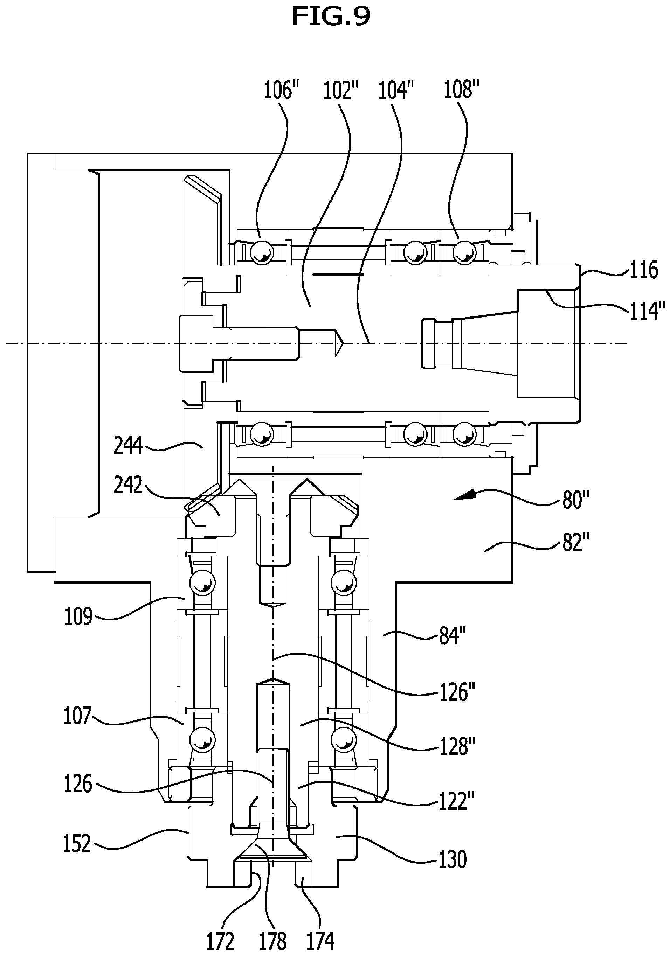

Bei einem dritten Ausführungsbeispiel eines erfindungsgemäßen Werkzeughalters 80", dargestellt in Fig. 9, ist die Werkzeugspindel 102" so angeordnet, dass deren Werkzeugspindelachse 104" quer zur Werkzeugantriebsachse 126 verläuft.

Dabei ist der Antriebsabschnitt 122" nicht einstückig an die Werkzeugspindel 102" angeformt, sondern Teil einer Zwischenwelle 128, welche koaxial zur Werkzeugantriebsachse 126 drehbar in dem Werkzeughaltergehäuse 82" mittels Zwischenwellenlagern 107, 109 innerhalb des Halteabschnitts 84" gelagert ist, während die Werkzeugspindel 102" ihrerseits mit den Lagern 106" und 108" außerhalb des Halteabschnitts 84" im Werkzeughaltergehäuse 82" gelagert ist.

Beispielsweise erfolgt das Antreiben der Werkzeugspindel 102" über ein auf der Zwischenwelle 128" sitzendes Kegelrad 242, welches mit einem mit der Werkzeugspindel 102" drehfest verbundenen Kegelrad 244 kämmt.

Im Übrigen sind diejenigen Teile des dritten Ausführungsbeispiels, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel verwiesen werden kann.

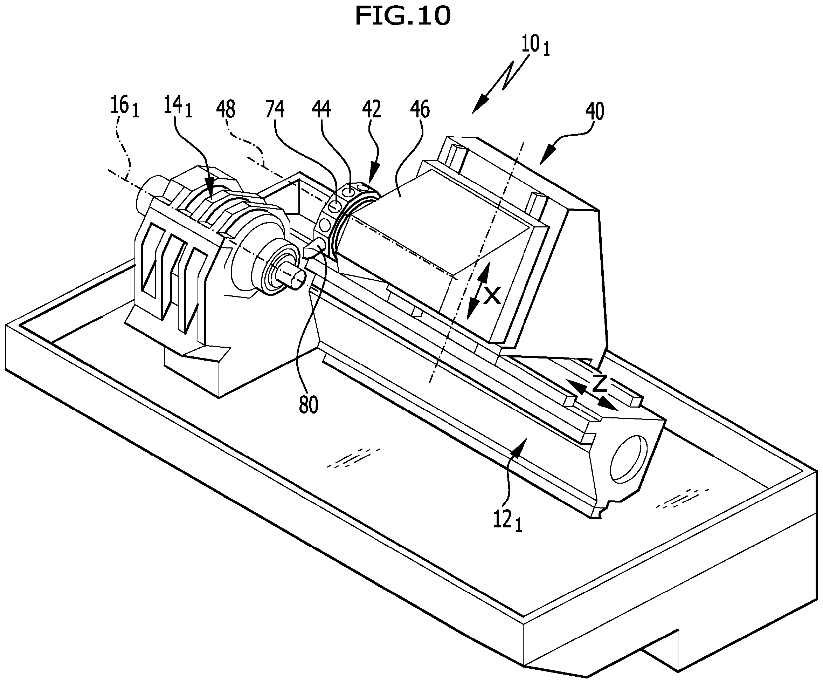

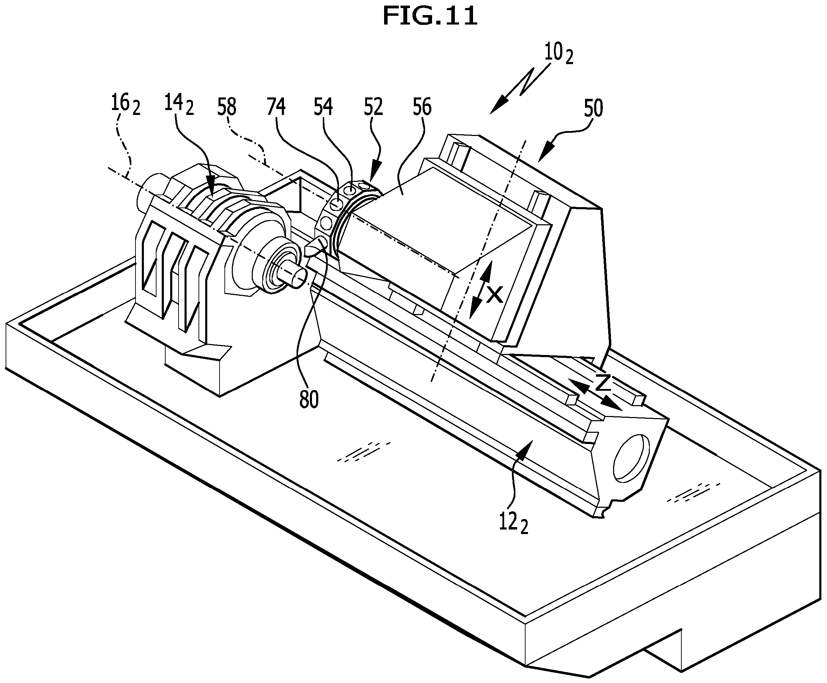

Alternativ zur Bildung einer Bearbeitungsgruppe durch die beiden Werkzeugträger 42 und 52 der Werkzeugmaschine 10 besteht aber auch die Möglichkeit, wie in Fig. 10 und 11 dargestellt, eine Bearbeitungsgruppe durch mindestens zwei identische oder unterschiedliche Werkzeugmaschinen 10₁ und 10₂ zu bilden, von denen jede ein Maschinengestell 12₁ beziehungsweise 12₂ aufweist, an welchem jeweils eine Werkstückspindel 14₁ beziehungsweise 14₂ angeordnet ist, welche zur Aufnahme eines zu bearbeitenden Werkstücks dient.

Mit der Werkstückspindel 14₁ beziehungsweise 14₂ ist das jeweilige Werkstück jeweils um eine Spindelachse 16₁ beziehungsweise 16₂ antreibbar, wobei die jeweilige Spindelachse 16₁ beziehungsweise 16₂ die jeweilige Z-Richtung der Werkzeugmaschine 10₁, 10₂ definiert.

Ferner ist die Werkstückspindel 14₁ beziehungsweise 14₂ beispielsweise bei diesen Werkzeugmaschinen 10₁ beziehungsweise 10₂ relativ zum Maschinengestell 12₁ beziehungsweise 12₂ stationär angeordnet.

Zur Bearbeitung der Werkstücke sind jeweils Werkzeugträger 42 beziehungsweise 52 vorgesehen, wobei jeder der Werkzeugträger 42 beziehungsweise 52 beispielsweise einen als Revolverkopf ausgebildeten Werkzeugträgerkopf 44 beziehungsweise 54 trägt, der relativ zu einem jeweiligen Werkzeugträgergehäuse 46 beziehungsweise 56 um die jeweilige Drehachse 48 beziehungsweise 58 drehbar ist, um jeweils unterschiedliche an dem entsprechenden Werkzeugträgerkopf 44 beziehungsweise 54 angeordnete Werkzeuge 80 an dem Werkstück in Einsatz bringen zu können.

Zur Bewegung der Werkzeugträger 42 beziehungsweise 52 relativ zum jeweiligen in der Werkstückspindel 14₁ beziehungsweise 14₂ aufgenommenen Werkstück ist jeweils an dem Maschinengestell 12₁ beziehungsweise 12₂ jeweils ein Kreuzschlittensystem 40 beziehungsweise 50, mit welchem der entsprechende Werkzeugträger 42 beziehungsweise 52 sowohl in X- als auch in Z-Richtung relativ zu der jeweiligen Werkstückspindel 14₁ beziehungsweise 14₂ bewegbar ist.

Die Kreuzschlittensysteme 40, 50 können jedoch aber auch um weitere und/oder völlig verschiedene Achsen bewegbar sein.

Bei dem Einsatz der mehreren Werkzeugmaschinen 10₁ beziehungsweise 10₂ bilden die Werkzeugträger 42 beziehungsweise 52 der verschiedenen Werkzeugmaschinen 10₁ beziehungsweise 10₂ eine Bearbeitungsgruppe, wobei in gleicher Weise wie bei der Werkzeugmaschine gemäß Fig. 1 der erste Werkzeugträger 42 einen Summenantrieb 150 zum gemeinsamen Antrieb aller ersten Antriebselemente 152 der Werkzeughalter 80 aufweist, während der zweite Werkzeugträger 52 einen Einzelantrieb 180 aufweist, welcher mit dem zweiten Antriebselement 172 von einem in der einzigen Bearbeitungsstellung stehenden Werkzeughalter 80 gekoppelt ist.

## Patentansprüche

1. Werkzeughalter (80) für Werkzeugträger (42, 52) einer Werkzeugmaschine (10), umfassend ein Werkzeughaltergehäuse (82), welches einen Halteabschnitt (84) umfasst, mit welchem der Werkzeughalter (80) in einer Werkzeughalteraufnahme (74) der Werkzeugträger (42, 52) fixierbar ist, eine in dem Werkzeughaltergehäuse (82) um eine Werkzeugspindelachse (104) drehbare Werkzeugspindel (102), welche an einem Ende eine Werkzeugaufnahme (114) aufweist und direkt oder indirekt mit einem Antriebsabschnitt (122) gekoppelt ist, welcher um eine Werkzeugantriebsachse (126) drehbar im Werkzeughaltergehäuse (82) gelagert ist und mit einer mit einem im Werkzeugträger (42, 52) vorgesehenen Antrieb (160, 180) für den Werkzeughalter (80) kuppelbaren Antriebskomponente (130) versehen ist, **dadurch gekennzeichnet , dass** die Antriebskomponente (130) als erstes Antriebselement (152) eine zum Eingriff in ein Antriebsrad (162) eines Summenantriebs ausgebildete Verzahnung (154) aufweist und dass die Antriebskomponente (130) als zweites Antriebselement (172) eine auf einer dem Werkzeughaltergehäuse (82) abgewandten Seite des ersten Antriebselements (152) angeordnetes zweites Antriebselement (172) zum Antrieb durch einen Einzelantrieb (180) aufweist, dass insbesondere das zweite Antriebselement (172) eine radiale Ausdehnung aufweist, die maximal einer radialen Ausdehnung der Verzahnung (154) entspricht, dass insbesondere das zweite Antriebselement (172) bezüglich der Werkzeugantriebsachse (126) eine maximale radiale Ausdehnung aufweist, die gleich oder kleiner als der radiale Abstand eines Zahngrundes (156) einer Zahnkontur der Verzahnung (154).

2. Werkzeughalter nach Anspruch 1, **dadurch gekennzeichnet, dass** das erste Antriebselement (152) als eine Stirnradverzahnung (154) ausgebildet ist.

3. Werkzeughalter nach einem der voranstehenden Ansprüche, **dadurch gekennzeichnet, dass** das zweite Antriebselement (172) ein koaxial zur Werkzeugantriebsachse (126) antreibbares Antriebselement ist.

4. Werkzeughalter nach einem der voranstehenden Ansprüche, **dadurch gekennzeichnet, dass** das zweite Antriebselement eine axialsymmetrisch zur Werkzeugantriebsachse (126) ausgebildete Antriebskontur (174) aufweist.

5. Werkzeughalter nach einem der voranstehenden Ansprüche, **dadurch gekennzeichnet, dass** die Antriebskontur (174) des zweiten Antriebselements (172) eine zur Werkzeugantriebsachse (126) mindestens zweizählige geradzahlige Symmetrie aufweist, dass insbesondere die Antriebskontur (174) in Richtung quer zur Werkzeugantriebsachse (126) einen Eingriff einer Abtriebskontur (184) zulassend ausgebildet ist.

6. Werkzeughalter nach einem der voranstehenden Ansprüche, **dadurch gekennzeichnet, dass** die Antriebskontur (174) des zweiten Antriebselements (172) als Konturelemente (176) Klauenkupplungselemente aufweist.

7. Werkzeughalter nach einem der voranstehenden Ansprüche, **dadurch gekennzeichnet, dass** das erste Antriebselement (152) mit der Werkzeugspindel (102) drehfest verbunden ist, dass insbesondere das erste Antriebselement lösbar mit einem mit der Werkzeugspindel (102) gekoppelten Antriebsabschnitt (122) verbunden ist.

8. Werkzeughalter nach einem der voranstehenden Ansprüche, **dadurch gekennzeichnet, dass** das zweite Antriebselement (172) drehfest mit dem Antriebsabschnitt (122) verbunden ist, dass insbesondere das zweite Antriebselement (172') drehfest mit dem ersten Antriebselement (152) verbunden ist, und/oder dass insbesondere das zweite Antriebselement (172) an den Antriebsabschnitt (122) angeformt ist.

9. Bearbeitungsgruppe umfassend mindestens einen ersten Werkzeugträger (42) und mindestens einen zweiten Werkzeugträger (52), in welche jeweils mehrere identisch ausgebildete Werkzeughalteraufnahmen (74) aufweisen, in die hinsichtlich eines jeweiligen Halteabschnitts (84) und einer Antriebskomponente (130), umfassend ein erstes Antriebselement (152) und ein zweites Antriebselement (172), identisch ausgebildete Werkzeughalter (80), insbesondere nach einem der voranstehenden Ansprüche, einsetzbar sind, wobei der mindestens eine erste Werkzeugträger (42) einen Summenantrieb (150) zum gemeinsamen Antreiben aller ersten Antriebselemente (152) der Werkzeughalter (80) aufweist und der mindestens eine zweite Werkzeugträger (52) einen einer einzigen Bearbeitungsstellung zugeordneten Einzelantrieb (180) aufweist, welcher mit dem zweiten Antriebselement (172) von einem in der einzigen Bearbeitungsstellung stehenden Werkzeughalter (80) gekoppelt ist.

10. Bearbeitungsgruppe nach Anspruch 9, **dadurch gekennzeichnet, dass** der mindestens eine erste Werkzeugträger (42) und der mindestens eine zweite Werkzeugträger (52) an derselben Werkzeugmaschine (10) angeordnet sind.

11. Bearbeitungsgruppe nach Anspruch 9, **dadurch gekennzeichnet, dass** der mindestens eine erste Werkzeugträger (42) an mindestens einer ersten Werkzeugmaschine (10₁) und der mindestens eine zweite Werkzeugträger (52) an mindestens einer zweiten Werkzeugmaschine (10₂) angeordnet sind, die beide Teil derselben Bearbeitungsgruppe sind.

12. Bearbeitungsgruppe nach einem der Ansprüche 9 bis 11, **dadurch gekennzeichnet, dass** der mindestens eine erste Werkzeugträger (42) einen um eine Drehachse (48) drehbar an einem Werkzeugträgergehäuse (46) angeordneten ersten Werkzeugträgerkopf (44) aufweist, der mit der Vielzahl von identischen Werkzeughalteraufnahmen (74) versehen ist, dass insbesondere in dem ersten Werkzeugträgerkopf (44) das Antriebsrad (162) des Summenantriebs (150) um dessen Drehachse (48) drehbar angeordnet ist.

13. Bearbeitungsgruppe nach einem der Ansprüche 9 bis 12, **dadurch gekennzeichnet, dass** der mindestens eine zweite Werkzeugträger (52) einen um eine Drehachse (58) drehbar an einem Werkzeugträgergehäuse (56) angeordneten zweiten Werkzeugträgerkopf (54) aufweist, der mit der Vielzahl von identischen Werkzeughalteraufnahmen (74) versehen ist, dass insbesondere in dem zweiten Werkzeugträgerkopf (54) der Einzelantrieb (180) angeordnet ist, dass insbesondere der Einzelantrieb (180) ein koaxial zu der Werkzeugspindelachse (104) des in der einzigen Bearbeitungsstellung stehenden Werkzeughalters (80) angeordnetes Abtriebselement (182) aufweist, dass insbesondere das Abtriebselement (182) an einer Abtriebswelle (192) des Einzelantriebs (180) angeordnet ist.

14. Bearbeitungsgruppe nach einem der Ansprüche 9 bis 13, **dadurch gekennzeichnet, dass** das zweite Antriebselement (172) der Antriebskomponente (130) und das Abtriebselement (182) des Einzelantriebs (180) beim Einschwenken eines Werkzeughalters (80) in die eine Bearbeitungsstellung relativ zueinander so ausgerichtet sind, dass diese nur durch das Einschwenken miteinander in Eingriff kommen.

15. Bearbeitungsgruppe nach einem der Ansprüche 9 bis 13, **dadurch gekennzeichnet, dass** der Einzelantrieb (180) mit einem Führungskamm (232) versehen ist, mit welchem die nicht in der einen Bearbeitungsstellung stehenden Werkzeughalter (80) zu ihrer definierten Ausrichtung mit ihren zweiten Antriebselementen (172) in Wechselwirkung stehen.
